# EUROPÄISCHE PATENTSCHRIFT

(11) **EP 0 978 402 B1**
(45) Veröffentlichungstag und Bekanntmachung des Hinweises auf die Patenterteilung: **23.04.2003**
(21) Anmeldenummer: 99114589.7
(22) Anmeldetag: 26.07.1999
(51) Int. Cl.: B60J 7/057

(54) **Vorrichtung zum Verstellen von bewegbaren Teilen an Fahrzeugen**
Actuating device for adjusting movable parts in vehicles
Dispositif d'actionnement pour déplacer des éléments mobiles dans des véhicules

(30) Priorität: 01.08.1998 DE 19834823
(43) Veröffentlichungstag der Anmeldung: 09.02.2000
(73) Patentinhaber: WEBASTO KAROSSERIESYSTEME GmbH, D-82131 Stockdorf (DE)
(72) Erfinder: Vordermaier, Claus, 81477 München (DE); Bauer, Bernd, 82131 Gauting (DE)
(74) Vertreter: Wiese, Gerhard

(56) Entgegenhaltungen:
- EP-A- 0 278 536
- DE-A- 4 027 767
- DE-C- 4 040 460
- US-A- 5 101 684

## Beschreibung

Die vorliegende Erfindung bezieht sich auf eine Vorrichtung zum Verstellen von bewegbaren Teilen, insbesondere von Schiebedächern, Fenstern oder dergleichen, an Fahrzeugen, mit einem elektrischen Stellmotor, der mit dem bewegbaren Teil mechanisch gekoppelt ist und dessen Speisestromkreis zum Abbremsen des Stellmotors kurzschließbar ist, wenn das bewegbare Teil eine gewünschte Stellung erreicht. Eine Vorrichtung dieser Art ist in DE 4040460C offenbart.

Bei dieser und anderen bekannten Vorrichtungen der gleichen Art (DE-OS 19 14 580, DE-OS 25 49 964, DE-AS 26 46 634) ist die Auslegung so getroffen, daß eine Kurzschlußbremsung des Stellmotors in einer vorbestimmten Sollstellung (Endstellung) des bewegbaren Teils erfolgt. Aus dieser Sollstellung wird das bewegbare Teil durch entsprechende Ansteuerung des Stellmotors herausbewegt.

Es ist ferner eine Antriebsvorrichtung für ein zwischen Endstellungen verstellbares Teil eines Fahrzeuges bekannt (DE 44 03 574 C1), bei der ein Elektromotor über ein ein Schneckenrad aufweisendes Untersetzungsgetriebe mit einem auf einer Abtriebswelle angeordneten Ritzel verbunden ist, das seinerseits über Antriebskabel mit dem verstellbaren Teil in Antriebsverbindung steht. Der Elektromotor wird mittels einer Schalteinrichtung in wenigstens einer vorbestimmten Stellung des verstellbaren Teils stillgesetzt, wobei zur Betätigung der Schalteinrichtung ein Schaltrad eines Exzenterrädergetriebes mit dem Untersetzungsgetriebe in Antriebsverbindung steht. Die Antriebswelle, der treibende Teil des Exzenterrädergetriebes und das Schneckenrad sind mit formschlüssigen Mitteln versehen, die eine axiale Verschiebung der Antriebswelle für eine Notbetätigung des Ritzels bei gleichzeitiger Entkopplung von Schneckenrad und Antriebswelle ermöglichen. Eine solche Lösung erfordert eine Vielzahl mechanischer Teile, so daß die Fertigungs- und Montagekosten relativ hoch sind. Außerdem kann durch Teilereibung ein hohes Geräuschniveau vorliegen.

Der Erfindung liegt die Aufgabe zugrunde, eine Vorrichtung zu schaffen, die eine Notbetätigung mit relativ niedrigem Kraftaufwand zuläßt, dabei aber mit vergleichsweise wenigen mechanischer Bauteilen auskommt und folglich nur einen relativ geringen Fertigungs- und Montageaufwand erfordert.

Diese Aufgabe wird ausgehend von einer Vorrichtung der eingangs genannten Art dadurch gelöst, daß der Stellmotor mit dem bewegbaren Teil ständig mechanisch gekoppelt ist, daß zur Notbetätigung des bewegbaren Teils dieses Teil zusammen mit dem Stellmotor von Hand verstellbar ist, und daß im Speisestromkreis des Stellmotors eine Freischalteinrichtung angeordnet ist, mittels deren im Notbetätigungsfall der Speisestromkreis zum Verhindern einer Kurzschlußbremsung des Stellmotors auftrennbar ist.

Die ständige mechanische Kopplung von Stellmotor und bewegbarem Teil bedeutet, daß eine Schalt- oder Reibkupplung zwischen dem Stellmotor und dem bewegbaren Teil entfällt. Gleichwohl ist aber bei der erfindungsgemäßen Lösung eine Notbetätigung des bewegbaren Teils, beispielsweise bei Ausfall der Fahrzeug-Bordspannung, mit geringem Kraftaufwand möglich, weil bei der Notbetätigung nicht gegen eine Kurzschlußbremse des Stellmotors gearbeitet zu werden braucht.

Bevorzugte weitere Ausgestaltungen der Erfindung ergeben sich aus den Unteransprüchen.

In der Regel ist in an sich bekannter Weise der Stellmotor in seiner Drehrichtung umsteuerbar, und im Speisestromkreis des Stellmotors liegt eine Umpol-Schalteinrichtung zum wahlweisen Vorgeben der Drehrichtung des Stellmotors, wobei vorzugsweise die Freischalteinrichtung und die Umpol-Schalteinrichtung derart miteinander gekoppelt sind, daß im Normalfall, das heißt bei einwandfrei funktionierender Verstell-Vorrichtung, die Kurzschlußbremsung des Stellmotors in jeder beliebigen gewünschten Stellung erfolgt. Dadurch ist ein rasches und exaktes Anhalten des bewegbaren Teils nicht nur in vorbestimmten Lagen, wie insbesondere den Endstellungen, sondern in jeder beliebigen Stellung gewährleistet.

Die Freischalteinrichtung kann insbesondere zwischen einer Motor-Speisestromquelle und der Umpol-Schalteinrichtung oder zwischen der Umpol-Schalteinrichtung und dem Stellmotor liegen, wodurch ein besonders kompakter, platzsparender Schaltungsaufbau ermöglicht wird. Letzteres gilt vor allem dann, wenn die Freischalteinrichtung in die Umpol-Schalteinrichtung integriert ist.

Die Freischalteinrichtung ist vorzugsweise derart ausgelegt ist, daß sie bei Ausfall der Speisespannung selbsttätig in den Zustand übergeht, in welchem sie den Speisestromkreis des Stellmotors auftrennt. Für eine Notbetätigung bei Spannungsausfall bedarf es dann keinerlei zusätzlicher Einwirkung auf die Freischalteinrichtung, um die Kurzschlußbremse unwirksam zu machen. Grundsätzlich ist es aber auch möglich, den Aufbau so zu gestalten, daß im Notbetätigungsfall die Freischalteinrichtung unabhängig von einem Ausfall der Bordspannung betätigt wird, zum Beispiel in Abhängigkeit von dem Einsatz eines Notbetätigungswerkzeugs.

Die Freischalteinrichtung kann mindestens ein Relais oder einen Halbleiterschalter, insbesondere in Form eines Feldeffekttransistors, aufweisen. Vorzugsweise ist dabei das Freischalt-Relais mit einem Kontakt versehen, der bei Abfallen des Freischalt-Relais den Speisestromkreis des Stellmotors auftrennt, beziehungsweise der Halbleiterschalter so angeordnet und ausgelegt, daß er bei. Ausfall der Speisespannung selbsttätig sperrt, und damit ebenfalls den speisestromhreis des stellmotors auftrennt.

Entsprechend abgewandelten Ausführungsformen der Erfindung kann die Freischalteinrichtung mindestens einen handbetätigten Schalter oder Taster oder eine von Hand lösbare Steckverbindung aufweisen, wobei die Steckverbindung als Zugelement ausgebildet und/oder in die Steckverbindung eine Sicherung integriert sein kann.

Bevorzugte Ausführungsbeispiele der Erfindung sind nachstehend unter Bezugnahme auf die beigefügten Zeichnungen näher erläutert. Es zeigen:
- FIG. 1: eine schematische Darstellung eines in Schließstellung befindlichen Hebe-Schiebedaches mit Stellmotor in Verbindung mit einer ersten Ausführungsform einer zugehörigen Steueranordnung;
- FIGN. 2 und 3: schematische Darstellungen des Hebe-Schiebedaches nach FIG. 1, wobei das Dach in ausgestellter beziehungsweise zurückgeschobener Lage veranschaulicht ist,
- FIGN. 4 bis 8: Prinzipschaltbilder von abgewandelten Ausführungsformen der Steueranordnung für den Stellmotor,
- FIGN. 9 bis 11: schematische Darstellungen eines Schiebe/Hebe-Dachantriebes mit im Speisestromkreis des Stellmotors liegendem handbetätigtem Schalter oder handbetätigter Taste,
- FIG. 12: einen Schiebe/Hebe-Dachantrieb mit im Speisestromkreis des Stellmotors liegender Steckverbindung,
- FIG. 13: eine Detailansicht des Bereiches A der FIG. 12,
- FIG. 14: einen Schiebe/Hebe-Dachantrieb mit im Speisestromkreis des Stellmotors liegender, als Zugelement ausgebildeter Steckverbindung sowie
- FIG. 15: eine Detailansicht des Bereiches B der FIG. 14.

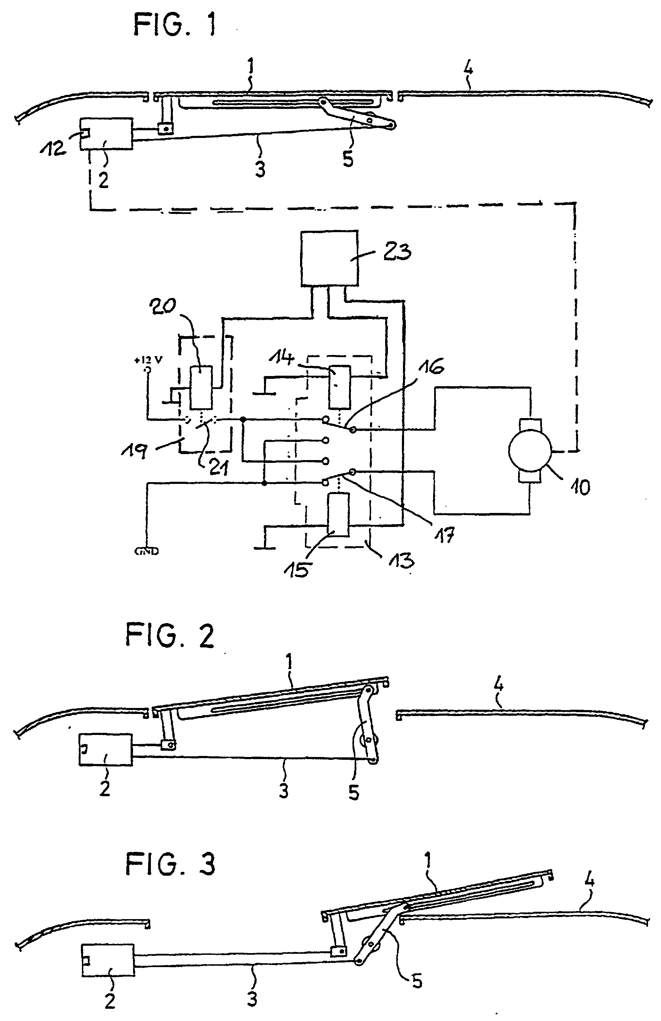

Bei dem Ausführungsbeispiel gemäß den FIGN. 1 bis 3 wird der Deckel 1 eines Hebe-Schiebe- oder Spoiler-Daches mittels einer Verstellvorrichtung über Antriebselemente 3, beispielsweise drucksteife Antriebskabel, wahlweise zwischen der in FIG. 1 dargestellten Schließstellung, der in eine Lüftungsstellung ausgestellten Lage nach FIG. 2 und der nach hinten über ein festes Dachteil 4 zurückgeschobenen Lage gemäß FIG. 3 verstellt. Die Antriebselemente 3 sind im Ausführungsbeispiel mit dem Deckel 1 über eine Verstellmechanik 5 verbunden. Die im Einzelfall vorgesehene Art der Ankopplung der Verstellvorrichtung an den Deckel 1 stellt jedoch keinen Teil der vorliegenden Erfindung dar; sie kann in beliebiger, an sich bekannter Weise erfolgen.

Zu der Verstellvorrichtung gehören ein Stellmotor 10 und ein mit dessen Abtriebsseite verbundenes Untersetzungsgetriebe 2, dessen Ausgang mit den Antriebselementen 3 in Antriebsverbindung steht. Der Stellmotor 10 ist über das Untersetzungsgetriebe 2, die Antriebselemente 3 und die Verstellmechanik 5 mit dem Deckel 1 ständig mechanisch gekoppelt. Der Deckel 1 kann bei einem Ausfall des elektromotorischen Antriebs aber auch von Hand verstellt, vor allem in seine Schließlage gebracht, werden (sogenannte Notbetätigung). Das kann insbesondere dadurch erfolgen, daß in an sich bekannter Weise (zum Beispiel DE 44 19 176 C1) ein Notbetätigungswerkzeug mit einem in FIG. 1 schematisch bei 12 angedeuteten Werkzeugaufnahmeteil des Untersetzungsgetriebes 2 in Eingriff gebracht und dann mittels des Notbetätigungswerkzeugs der Deckel 1 unter Mitnahme des angekoppelten Stellmotors 10 von Hand verschoben wird.

Im Speisestromkreis des Stellmotors 10 liegt eine insgesamt mit 13 bezeichnete Umpol-Schalteinrichtung, zu der zwei Relais 14 und 15 mit jeweils einem Umschaltkontakt 16 beziehungsweise 17 gehören. Die Umpol-Schalteinrichtung 13 erlaubt es, die an den Stellmotor 10 von einer Spannungsquelle (+12V, GND) angelegte Speisespannung umzupolen, um auf diese Weise die Drehrichtung des Stellmotors 10 umzukehren. Zwischen die positive Seite +12V der Spannungsquelle und den damit zu verbindenden Anschluß der Umschaltkontakte 16 und 17 ist eine Freischalteinrichtung 19 geschaltet, die von einem Freischalt-Relais 20 mit einem Schließkontakt 21 gebildet wird. Die Relais 14, 15 und 20 werden von einer Steuerstufe 23 angesteuert. Im stromlosen Zustand der Relais nehmen die Relaiskontakte die in FIG. I gezeigten Stellungen ein.

Wird ausgehend von dem Zustand gemäß FIG. 1 mittels der Steuerstufe 23 das Freischalt-Relais 20 zum Anzug gebracht und dementsprechend der Kontakt 21 geschlossen, fließt im Speisestromkreis des Stellmotors 10 Strom von der positiven Seite +12V der Spannungsquelle über die Kontakte 21 und 16, den Stellmotor 10 und den Umschaltkontakt 17 zur negativen Seite GND der Spannungsquelle. Der Stellmotor 10 läuft in der einen Drehrichtung.

Wird ausgehend von dem Zustand gemäß FIG. 1 mittels der Steuerstufe 23 das Freischalt-Relais 20 zum Anzug gebracht und werden außerdem die Relais 14 und 15 von der Steuerstufe 23 umgesteuert, fließt über den Stellmotor 10 Strom in entgegengesetzter Richtung, nämlich von der positiven Seite +12V der Spannungsquelle über die Relaiskontakte 21 und 17, den Motor 10 und den Umschaltkontakt 16 zur negativen Seite GND der Spannungsquelle. Der Stellmotor 10 läuft in der anderen Drehrichtung.

Zum Stillsetzen des Stellmotors 10 aus dem Lauf in der einen oder der anderen Drehrichtung können durch Ansteuern der Relais 14, 15 mittels der Steuerstufe 23 die Umschaltkontakte 16 und 17 entweder beide mit der negativen Seite GND oder beide mit der positiven Seite +12V der Spannungsquelle in Verbindung gebracht werden. In beiden Fällen wird der Motor 10 kurzgeschlossen und dadurch rasch zum Stillstand gebremst.

Wird dagegen ausgehend von einer Stellung der Relaiskontakte 16 und 17 entsprechend einem Lauf des Stellmotors 10 in der einen oder der anderen Drehrichtung das Freischalt-Relais 20 abgeworfen und infolgedessen der Schließkontakt 21 geöffnet, wird bei stromlosem Motor der Motorspeisestromkreis aufgetrennt. Das bedeutet, daß der Motorkurzschluß aufgehoben wird. Dadurch wird die Kurzschlußbremse unwirksam gemacht. Jetzt kann im Zuge einer Notbetätigung der Deckel 1 samt Getriebe 2 und Stellmotor 10 mit verhältnismäßig geringem Kraftaufwand von Hand verstellt werden.

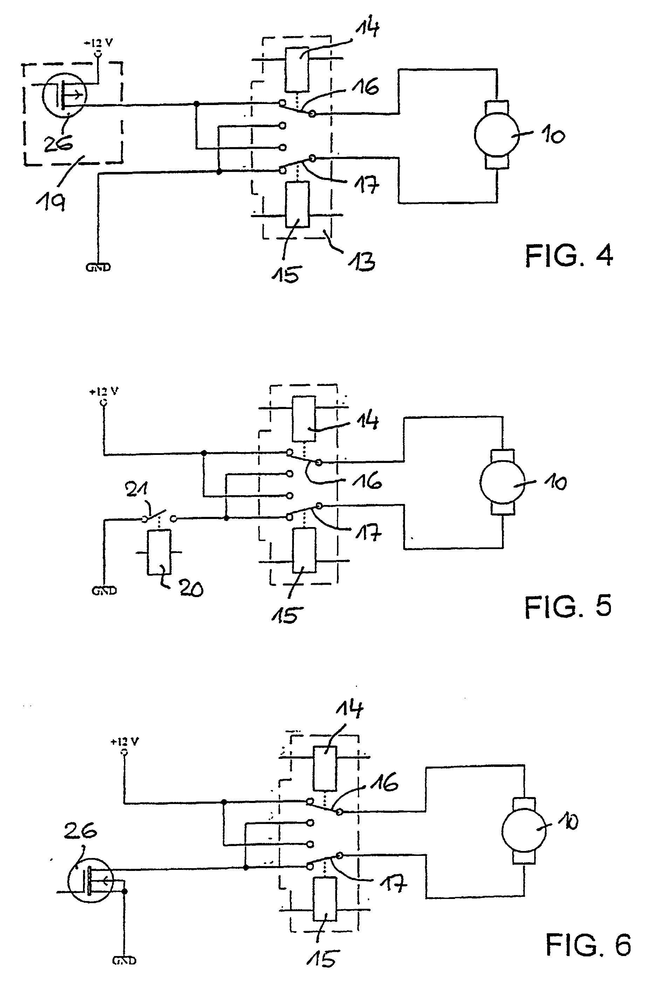

Bei dem Ausführungsbeispiel gemäß FIG. 4 weist die Freischalteinrichtung 19 kein Relais, sondern einen Halbleiterschalter in Form eines Feldeffekttransistors 26 auf, der von der Steuerstufe 23 gemäß FIG. 1 in analoger Weise wie das Freischalt-Relais 20 angesteuert wird.

Die Ausführungsbeispiele der FIGN. 5 und 6 unterscheiden sich von denjenigen der FIGN. 1 und 4 nur darin, daß die Freischalteinrichtung (Freischalt-Relais 20 beziehungsweise Feldeffekttransistors 26) statt in der Zuleitung von der positiven Seite +12V der Spannungsquelle nunmehr in der Verbindung zur negativen Seite (Masse) der Spannungsquelle liegt.

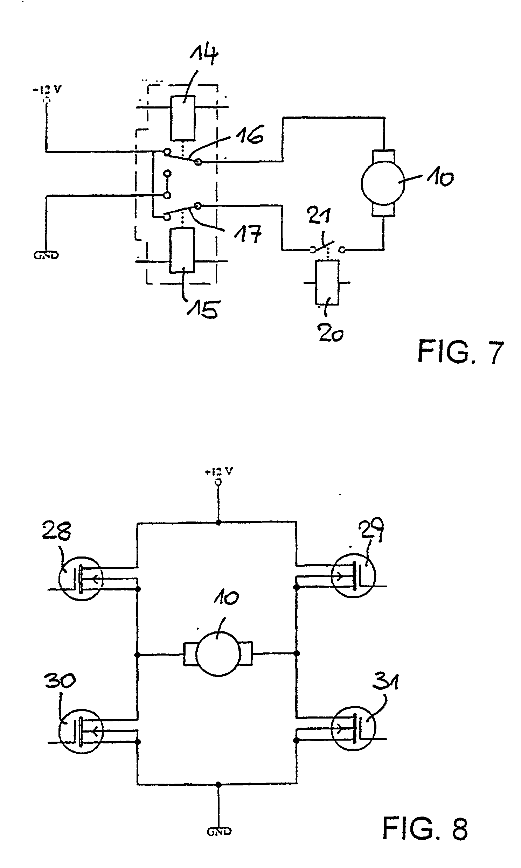

Während bei den bisher erläuterten Ausführungsformen die Freischalteinrichtung 19 jeweilszwischender Motor-Speisestromquelle (+12V, GND) und der Umpol-Schalteinrichtung 13 liegt, ist im Falle des Ausführungsbeispiels nach FIG. 7 die Freischalteinrichtung 19 mit dem Freischalt-Relais 20 zwischen die Umpol- Schalteinrichtung 13 und den Stellmotor 10 geschaltet.

Die FIG. 8 zeigt ein Ausführungsbeispiel, bei dem die Freischalteinrichtung in die Umpol- Schalteinrichtung integriert ist Dabei liegt der Stellmotor 10 in der einen Diagonale einer Halbleiter-Vollbrücke mit Halbleiterschaltern in Form von Feldeffekttransistoren 28, 29, 30 und 31. Die andere Diagonale der Halbleiter-Vollbrücke ist an die Motor-Speisestromquelle angeschlossen. Durch entsprechendes Ansteuern der Feldeffekttransistoren 28, 29, 30 und 31 mittels der Steuerstufe 23 kann eine Funktion erreicht werden, die analog der oben in Verbindung mit der FIG. 1 ausführlich erläuterten Funktionsweise ist.

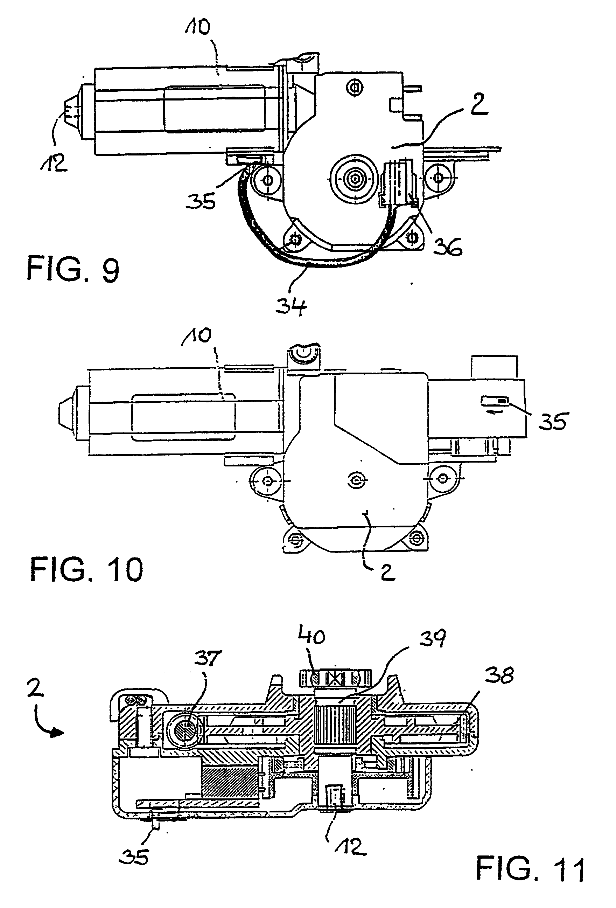

Im Falle der Ausführungsbeispiele nach den FIGN. 9, 10 und 11 wird die Freischalteinrichtung von einer Taste oder einem Schalter 35 gebildet, die beziehungsweise der entsprechend dem Relaiskontakt 21 bei den Ausführungsbeispiele der FIGN. 1, oder 7 im Speisestromkreis des Stellmotors 10 liegt. Die Taste oder der Schalter 35 wird im Notbetätigungsfall von Hand betätigt, um den Speisestromkreis des Stellmotors 10 aufzutrennen und dadurch während der Notbetätigung eine unerwünschte Kurzschlußbremsung zu verhindern. Im Normalfall ist die Taste beziehungsweise der Schalter 35 geschlossen. Wie die Ausführungsbeispiele der FIGN. 9, 10 und 11 erkennen lassen, kann die Taste beziehungsweise der Schalter 35 grundsätzlich an beliebiger Stelle des Gehäuses der Verstellvorrichtung angeordnet sein. Wesentlich ist nur, daß die Taste beziehungsweise der Schalter 35 für eine Notbetätigung zugänglich ist.

FIG. 9 zeigt bei 34 ein von einem Kupplungsstück 36 zum Motor 10 führendes Stromversorgungskabel.

Die Schnittdarstellung der FIG. 11 läßt erkennen, daß das Untersetzungsgetriebe 2 eine mit der Welle des Motors 10 verbundene Schneckenwelle 37 und ein damit in Eingriff stehendes Schneckenrad 38 aufweist. Das Schneckenrad 38 sitzt auf einer Abtriebswelle 39, mit der ferner ein Ritzel 40 drehfest verbunden ist. Das Ritzel 40 steht seinerseits mit den unter Bezugnahme auf FIG. 1 erläuterten Antriebselementen 3 in Eingriff, bei denen es sich vorzugsweise um drucksteife Antriebskabel handelt.

Das Werkzeugaufnahmeteil 12 kann in der in FIG. 9 angedeuteten Weise an dem von der Schneckenwelle 37 (FIG. 11) abliegenden Ende der Motorwelle oder, wenn das Untersetzungsgetriebe 2 nicht selbsthemmend ist, an dem von dem Ritzel 40 (FIG. 11) abliegenden Ende der Abtriebswelle 39 vorgesehen sein. Als Notbetätigungswerkzeug kann zum Beispiel in an sich bekannter Weise ein Sechskantschlüssel dienen, wobei dann das Werkzeugaufnahmeteil 12 als Sechskant-Sackloch ausgebildet sein kann.

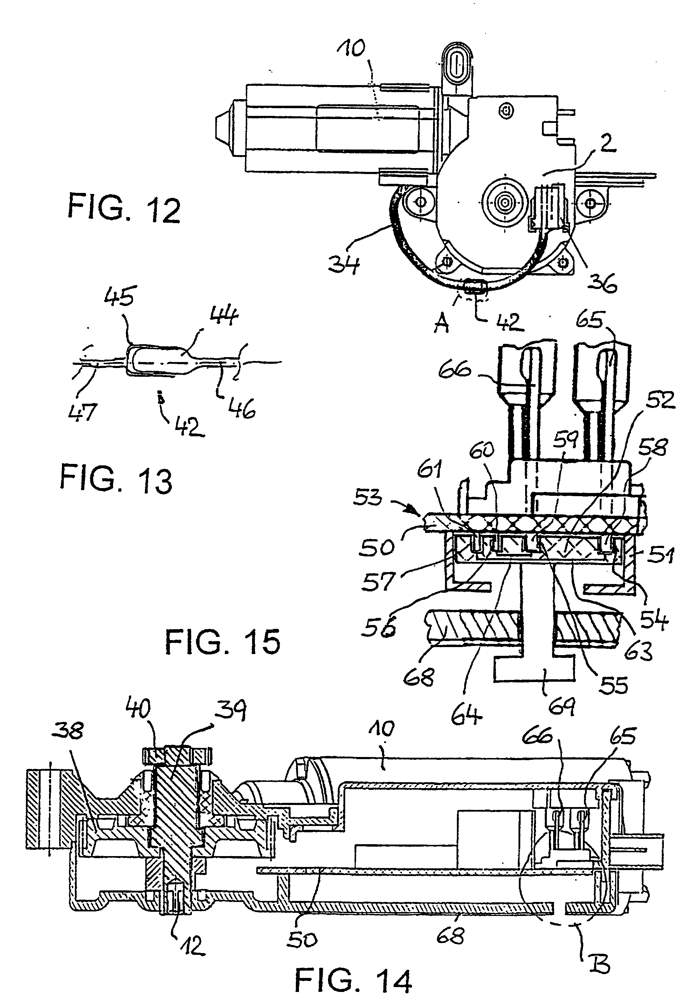

Die Verstellvorrichtung gemäß den FIGN. 12 und 13 entspricht derjenigen nach FIG. 9, mit der Ausnahme, daß anstelle des Schalters 35 als Freischalteinrichtung eine Steckverbindung 42 vorgesehen ist, die in dem Stromversorgungskabel 34 sitzt und die es erlaubt, für eine Notbetätigung das Stromversorgungskabel zu unterbrechen. Wie im einzelnen aus der Detailansicht der FIG. 13 hervorgeht, weist die Steckverbindung 42 einen Stecker 44 und eine im Normalfall damit in elektrischem Kontakt stehende Buchse 45 auf, die jeweils an einen Abschnitt 46 beziehungsweise 47 des Stromversorgungskabels 34 angeschlossen sind.

Die FIGN. 14 und 15 zeigen ein Ausführungsbeispiel, bei dem an einer Leiterplatte 50 der Stellvorrichtung eine Führung 51 angebracht ist. In der Führung 51 sitzt eine elektrisch isolierende Buchsenhalterung 52 einer als Zugelement ausgebildeten, insgesamt mit 53 bezeichneten Steckverbindung, die als Freischalteinrichtung dient. Die Buchsenhalterung 52 weist vier Buchsen 54, 55, 56 und 57 auf, die mit komplementären Steckerteilen 58, 59, 60 beziehungsweise 61 zusammenwirken. Die Buchsen 54 und 57 und die Buchsen 55 und 56 sind jeweils über einen Drahtbügel 63 beziehungsweise 64 leitend miteinander verbunden. Die Steckerteile 58 und 59 stehen in elektrisch leitender Verbindung mit Stromzuführungskontakten 65 beziehungsweise 66, über welche der Stellmotor 10 mit Speisestrom versorgt wird. An die Steckerteile 60 und 61 sind nicht dargestellte Stromzuführungsleitungen angeschlossen. Diese Leitungen sind in der in FIG. 15 gezeigten Normalstellung über die Buchsen 54, 55, 56 und 57, die Steckerteile 58, 59, 60 und 61 sowie die Drahtbügel 63 und 64 mit dem Stellmotor 10 verbunden. Der Stellmotor kann zum Verstellen des Deckels 1 mit Strom versorgt werden. Der Stellmotor 10 wird dann analog zu den zuvor erläuterten Ausführungsbeispielen kurzgeschlossen und damit abgebremst, wenn der Dekkel 1 die gewünschte Position erreicht.

Im Notbetätigungsfall wird mittels eines durch eine Gehäusewand 68 hindurchreichenden Griffteils 69 die Buchsenhalterung 52 in FIG. 15 nach unten gezogen. Dadurch wird die Stromzuführung zu dem Stellmotor 10 unterbrochen. Die Kurzschlußbremse ist deaktiviert.

In die Steckverbindung 53 kann gegebenenfalls eine Sicherung integriert sein. Dies kann in einfacher Weise dadurch geschehen, daß der Drahtbügel 63 und/oder der Drahtbügel 64 als Schmelzsicherungsdraht ausgebildet ist (sind), der durchschmilzt, wenn der Motorstrom einen vorgegebenen Höchstwert überschreitet.

### Bezugszeichenliste

- 1: Deckel
- 2: Untersetzungsgetriebe
- 3: Antriebselement
- 4: Dachteil
- 5: Verstellmechanik
- 10: Stellmotor
- 12: Werkzeugaufnahmeteil
- 13: Umpol-Schalteinrichtung
- 14, 15: Relais
- 16, 17: Umschaltkontakt
- 19: Freischalteinrichtung
- 20: Freischalt-Relais
- 21: Schließkontakt
- 23: Steuerstufe
- 26, 28, 29, 30, 31: Halbleiterschalter
- 34: Stromversorgungskabel
- 35: Taste oder Schalter
- 36: Kupplungsstück
- 37: Schneckenwelle
- 38: Schneckenrad
- 39: Abtriebswelle
- 40: Ritzel
- 42: Steckverbindung
- 44: Stecker
- 45: Buchse
- 46, 47: Abschnitt
- 50: Leiterplatte
- 51: Führung
- 52: Buchsenhalterung
- 53: Steckverbindung
- 54, 55, 56, 57: Buchse
- 58, 59, 60,: 61 Steckerteil
- 63, 64: Drahtbügel
- 68: Gehäusewand
- 69: Griffteil

## Patentansprüche

1. Vorrichtung zum Verstellen von bewegbaren Teilen, insbesondere von Schiebedächern, Fenstern oder dergleichen, an Fahrzeugen, mit einem elektrischen Stellmotor (10), der mit dem bewegbaren Teil (1) mechanisch gekoppelt ist und dessen Speisestromkreis zum Abbremsen des Stellmotors (10) kurzschließbar ist, wenn das bewegbare Teil (1) eine gewünschte Stellung erreicht, **dadurch gekennzeichnet, daß** der Stellmotor (10) mit dem bewegbaren Teil (Deckel 1) ständig mechanisch gekoppelt ist, daß zur Notbetätigung des bewegbaren Teils dieses Teil zusammen mit dem Stellmotor (10) von Hand verstellbar ist, und daß im Speisestromkreis des Stellmotors (10) eine Freischalteinrichtung (19, 35, 42, 53) angeordnet ist, mittels deren im Notbetätigungsfall der Speisestromkreis zum Verhindern einer Kurzschlußbremsung des Stellmotors (10) auftrennbar ist.

2. Vorrichtung nach Anspruch 1, **dadurch gekennzeichnet, daß** der Stellmotor (10) in seiner Drehrichtung umsteuerbar ist und daß im Speisestromkreis des Stellmotors (10) eine Umpol-Schalteinrichtung (13) zum wahlweisen Vorgeben der Drehrichtung des Stellmotors liegt.

3. Vorrichtung nach Anspruch 2, **dadurch gekennzeichnet, daß** die Freischalteinrichtung (19, 35, 42, 53) und die Umpol-Schalteinrichtung (13) derart miteinander gekoppelt sind, daß im Normalfall eine Kurzschlußbremsung des Stellmotors (10) in jeder beliebigen gewünschten Stellung erfolgt.

4. Vorrichtung nach Anspruch 2 oder 3, **dadurch gekennzeichnet, daß** die Freischalteinrichtung (19, 35, 42, 53) zwischen einer Motor-Speisestromquelle und der Umpol-Schalteinrichtung (13) liegt.

5. Vorrichtung nach Anspruch 2 oder 3, **dadurch gekennzeichnet, daß** die Freischalteinrichtung (19, 35, 42, 53) zwischen der Umpol-Schalteinrichtung (13) und dem Stellmotor (10) liegt.

6. Vorrichtung nach Anspruch 2 oder 3, **dadurch gekennzeichnet, daß** die Freischalteinrichtung in die Umpol-Schalteinrichtung integriert ist.

7. Vorrichtung nach einem der vorhergehenden Ansprüche, **dadurch gekennzeichnet, daß** die Freischalteinrichtung (19) derart ausgelegt ist, daß sie bei Ausfall der Speisespannung selbsttätig in den Zustand übergeht, in welchem sie den Speisestromkreis des Stellmotors (10) auftrennt.

8. Vorrichtung nach einem der vorhergehenden Ansprüche, **dadurch gekennzeichnet, daß** die Freischalteinrichtung (19) mindestens ein Freischalt-Relais (20) aufweist.

9. Vorrichtung nach Ansprüchen 7 und 8, **dadurch gekennzeichnet, daß** das Freischalt-Relais (20) einen Kontakt (21) aufweist, der bei Abfallen des Freischalt-Relais den Speisestromkreis des Stellmotors (10) auftrennt.

10. Vorrichtung nach einem der Ansprüche 1 bis 7, **dadurch gekennzeichnet, daß** die Freischalteinrichtung (19) mindestens einen Halbleiterschalter (26) aufweist.

11. Vorrichtung nach Ansprüchen 7 und 10, **dadurch gekennzeichnet, daß** der Halbleiterschalter (26) bei Ausfall der Speisespannung selbsttätig sperrt.

12. Vorrichtung nach Anspruch 10 oder 11, **dadurch gekennzeichnet, daß als** Halbleiterschalter (26) ein Feldeffekttransistor vorgesehen ist.

13. Vorrichtung nach einem der Ansprüche 1 bis 5 , **dadurch gekennzeichnet, daß** die Freischalteinrichtung mindestens einen handbetätigten Schalter oder Taster (35) aufweist.

14. Vorrichtung nach einem der Ansprüche 1 bis 5, **dadurch gekennzeichnet, daß** die Freischalteinrichtung mindestens eine von Hand lösbare Steckverbindung (42, 53) aufweist.

15. Vorrichtung nach Anspruch 14, **dadurch gekennzeichnet, daß** die Steckverbindung (53) als Zugelement ausgebildet ist.

16. Vorrichtung nach Anspruch 14 oder 15, **dadurch gekennzeichnet, daß** in die Steckverbindung (53) eine Sicherung (Drahtbügel 63, 64) integriert ist.

## Claims

1. A device for displacing movable parts, particularly sliding roofs, windows or the like, on motor vehicles, with an electrical servomotor (10) which is mechanically coupled to the movable part (1) and at which the supply circuit can be short-circuited in order to brake the servomotor (10), when the movable part (1) has reached a desired position, **characterised in that** the servomotor (10) is permanently mechanically coupled to the movable part (cover 1) and **in that** for emergency actuation of the movable part, this part can be displaced by hand together with the servomotor (10) and **in that** there is in the supply circuit of the servomotor (10) a isolating means (19, 35, 42, 53) by means of which, in an emergency, the feed circuit can be isolated in order to prevent a short-circuit braking of the servomotor (10)

2. A device according to claim 1, **characterised in that** the direction of rotation of the servomotor (10) can be reversed and **in that** there is in the supply circuit of the servomotor (10) a reverse switching means (13) for optional predetermination of the direction of rotation of the servomotor.

3. A device according to claim 2, **characterised in that** the isolating means (19, 35, 42, 53) and the reverse switching means (13) are so coupled to each other that in an emergency a short-circuit braking of the servomotor (10) is possible in any desired position.

4. A device according to claim 2 or 3, **characterised in that** the isolating means (19, 35, 42, 53) is disposed between a motor voltage source and the reverse switching means (13).

5. A device according to claim 2 or 3, **characterised in that** the isolating means (19, 35, 42, 53) is situated between the reverse switching means (13) and the servomotor (10).

6. A device according to claim 2 or 3, **characterised in that** the isolating means is integrated into the reverse switching means.

7. A device according to one of the preceding claims, **characterised in that** the isolating means (19) is so designed that upon failure of the supply voltage it automatically moves into the state in which it isolates the supply circuit of the servomotor (10).

8. A device according to one of the preceding claims, **characterised in that** the isolating means (19) comprises at least one isolating relay (20).

9. A device according to claims 7 and 8, **characterised in that** the isolating relay (20) comprises a contact (21) which isolates the supply circuit of the servomotor (10) when the isolating relay is de-energised.

10. A device according to one of claims 1 to 7, **characterised in that** the isolating means (19) comprises at least one semiconductor switch (26).

11. A device according to claims 7 and 10, **characterised in that** the semi-conductor switch (26) locks up automatically when the supply voltage fails.

12. A device according to claim 10 or 11, **characterised in that** a field effect transistor is provided as the semiconductor switch (26).

13. A device according to one of claims 1 to 5, **characterised in that** the isolating means comprises at least one manually operated switch or button (35).

14. A device according to one of claims 1 to 5, **characterised in that** the isolating means comprises at least one plug-in connection (42, 53) which can be manually disengaged.

15. A device according to claim 14, **characterised in that** the plug-in connection (53) is constructed as a tension element.

16. A device according to claim 14 or 15, **characterised in that** a fuse (wire clip 63, 64) is integrated into the plug-in connection (53).

## Revendications

1. Dispositif d'actionnement pour déplacer des éléments mobiles, en particulier des toits ouvrants, des vitres ou des éléments similaires, dans des véhicules, avec un servomoteur électrique (10), qui fait l'objet d'un couplage mécanique avec l'élément mobile (1) et dont le circuit de courant d'alimentation peut être court-circuité pour freiner le servomoteur (10) lorsque l'élément mobile (1) atteint une position souhaitée, **caractérisé en ce que** le servomoteur (10) fait l'objet d'un couplage mécanique permanent avec l'élément mobile (couvercle 1), **en ce que** pour un actionnement de secours de l'élément mobile cet élément peut être déplacé manuellement en même temps que le servomoteur (10) et **en ce que** dans le circuit de courant d'alimentation du servomoteur (10) est disposé un dispositif de découplage (19, 35, 42, 53), à l'aide duquel il est possible, dans le cas d'un actionnement de secours, de couper le circuit de courant d'alimentation pour éviter un freinage par court-circuit du servomoteur (10).

2. Dispositif selon la revendication 1, **caractérisé en ce que** le sens de rotation du servomoteur (10) peut être inversé et **en ce que** dans le circuit d'alimentation du servomoteur (10) se trouve un dispositif d'inversion de polarité (13) pour imposer au choix le sens de rotation du servomoteur.

3. Dispositif selon la revendication 2, **caractérisé en ce que** le dispositif de découplage (19, 35, 42, 53) et le dispositif d'inversion de polarité (13) sont couplés de telle manière entre eux que dans un cas normal un freinage par court-circuit du servomoteur (10) a lieu dans n'importe quelle position souhaitée.

4. Dispositif selon la revendication 2 ou 3, **caractérisé en ce que** le dispositif de découplage (19, 35, 42, 53) se trouve entre une source de courant pour l'alimentation du moteur et le dispositif d'inversion de polarité (13).

5. Dispositif selon la revendication 2 ou 3, **caractérisé en ce que** le dispositif de découplage (19, 35, 42, 53) se trouve entre le dispositif d'inversion de polarité (13) et le servomoteur (10).

6. Dispositif selon la revendication 2 ou 3, **caractérisé en ce que** le dispositif de découplage est intégré dans le dispositif d'inversion de polarité.

7. Dispositif selon l'une des revendications précédentes, **caractérisé en ce que** le dispositif de découplage (19) est conçu de telle façon qu'en cas de défaillance de la tension d'alimentation il passe automatiquement dans la position, dans laquelle il scinde le circuit de courant d'alimentation du servomoteur (10).

8. Dispositif selon l'une des revendications précédentes, **caractérisé en ce que** le dispositif de découplage (19) comprend au moins un relais de découplage (20).

9. Dispositif selon les revendications 7 et 8, **caractérisé en ce que** le relais de découplage (20) comprend un contact (21), qui scinde le circuit de courant d'alimentation du servomoteur (10) lorsque le relais de découplage retombe.

10. Dispositif selon l'une des revendications 1 à 7, **caractérisé en ce que** le dispositif de découplage (19) comprend au moins un interrupteur à semi-conducteurs (26).

11. Dispositif selon les revendications 7 et 10, **caractérisé en ce que** l'interrupteur à semi-conducteurs (26) réalise automatiquement un blocage en cas de défaillance de la tension d'alimentation.

12. Dispositif selon la revendication 10 ou 11, **caractérisé en ce qu'**un transistor à effet de champ est prévu comme interrupteur à semi-conducteurs (26).

13. Dispositif selon l'une des revendications 1 à 5, **caractérisé en ce que** le dispositif de découplage comprend au moins un interrupteur ou un poussoir actionné à la main (35).

14. Dispositif selon l'une des revendications 1 à 5, **caractérisé en ce que** le dispositif de découplage comprend au moins une connexion enfichable (42, 53) pouvant être désolidarisée à la main.

15. Dispositif selon la revendication 14, **caractérisé en ce que** la connexion enfichable (53) est conçue comme élément à désolidariser par traction.

16. Dispositif selon la revendication 14 ou 15, **caractérisé en ce que** dans la connexion enfichable (53) est intégré un fusible (barrette en fil 63, 64).
